# EUROPÄISCHE PATENTSCHRIFT

(11) **EP 2 387 918 B1**
(45) Veröffentlichungstag und Bekanntmachung des Hinweises auf die Patenterteilung: **03.07.2013**
(21) Anmeldenummer: 11165426.5
(22) Anmeldetag: 10.05.2011
(51) Int. Cl.: A47F 5/08, F16B 45/00

(54) **Wandhalter für ein Magnetwandsystem**
Wall mounting for a magnetic wall system
Support mural pour un système mural à aimant

(30) Priorität: 20.05.2010 DE 102010021741
(43) Veröffentlichungstag der Anmeldung: 23.11.2011
(73) Patentinhaber: OCTANORM-VERTRIEBS-GMBH FÜR BAUELEMENTE, 70794 Filderstadt (DE)
(72) Erfinder: Bruder, Hans, 72631, Aichtal (DE)
(74) Vertreter: Patentanwälte Ruff, Wilhelm, Beier, Dauster & Partner

(56) Entgegenhaltungen:
- DE-U1-202005 011 883
- US-A1- 2007 194 187

## Beschreibung

Die Erfindung betrifft einen Wandhalter für ein Magnetwandsystem mit einem Gehäuse sowie wenigstens zwei in das Gehäuse eingesetzten Magneten, wobei das Gehäuse wenigstens eine magnetisierbare Platte aufweist, auf die jeweils wenigstens zwei Magnete unmittelbar aufgesetzt sind. Die Erfindung betrifft auch ein Magnetwandsystem mit einem erfindungsgemäßen Wandhalter.

Aus der US-Offenlegungsschrift US 2007/0194187 A1 ist ein Wandhalter in Form einer magnetischen Halteleiste für eine magnetisierbare Wand zum Einklemmen eines Papiers zwischen der Wand und dem Wandhalter bekannt. Der Wandhalter weist zwei Magnete auf, die unmittelbar auf eine magnetisierbare Platte aufgesetzt sind. Die Platte und die Magnete sind allseitig von einem Gehäuse aus Silikongummi umgeben.

Aus der deutschen Gebrauchsmusterschrift DE 20 2005 011 883 U1 ist ein Wandhalter für ein Magnetwandsystem bekannt, bei dem ein Kunststoffgehäuse an seiner Rückseite, die im montierten Zustand einer magnetisierbaren Wand zugewandt ist, mit einem Hohlraum versehen ist, in dem zwei Magnete angeordnet sind. Die Magnete sind mit der Rückseite des Gehäuses fest verbunden, wohl verklebt.

Mit der Erfindung soll ein verbesserter Wandhalter für ein Magnetwandsystem bereit gestellt werden.

Erfindungsgemäß ist hierzu ein Wandhalter für ein Magnetwandsystem mit einem Gehäuse sowie wenigstens zwei in das Gehäuse eingesetzten Magneten vorgesehen, bei dem das Gehäuse wenigstens eine magnetisierbare Platte aufweist, auf die jeweils wenigstens zwei Magnete unmittelbar aufgesetzt sind, bei dem das Gehäuse wenigstens eine Raststelle mit wenigstens einem Rastvorsprung aufweist, wobei die magnetisierbare Platte mittels der Raststelle am Gehäuse befestigt ist und bei dem die Magnete mit ihrer, dem Gehäuse abgewandten Haftfläche geringfügig über einen Rand des Gehäuses hinausragen.

Indem die Magnete auf die magnetisierbare Platte im Gehäuse unmittelbar aufgesetzt sind, hält der Magnet durch die Magnetkraft selbst an der Platte und somit innerhalb des Gehäuses. Unter einer magnetisierbaren Platte wird eine Platte verstanden, die von einem Magneten angezogen wird. Es ist daher nicht mehr erforderlich die Magnete in das Gehäuse einzukleben oder in sonstiger Weise zu verankern. Das Vorsehen einer magnetisierbaren Platte mit wenigstens einer ebenen Fläche, auf die die Magnete unmittelbar aufgesetzt sind, sorgt gleichzeitig für eine exakt parallele Ausrichtung der beiden Magnete und speziell der Haftflächen der Magnete. Beispielsweise können kreisscheibenförmige Magnete mit planparallelen Haftflächen verwendet werden. Mit Ausnahme der magnetisierbaren Platte kann das übrige Gehäuse des Wandhalters aus nichtmagnetisierbarem Material bestehen.

Indem die magnetisierbare Platte mittels der Raststelle am Gehäuse befestigt ist, ist deren Montage in sehr einfacher Weise möglich, indem die magnetisierbare Platte in die Raststelle am Gehäuse eingedrückt wird. Die magnetisierbare Platte kann dadurch mit sehr geringen Toleranzen innerhalb des Gehäuses festgelegt werden, wodurch gleichzeitig die Position der Magnete relativ zum Gehäuse sehr genau festgelegt ist, da sich die Magnete ja über ihre Haftflächen an der magnetisierbaren Platte ausrichten.

In Weiterbildung der Erfindung sind jeweils drei Magnete auf die magnetisierbare Platte aufgesetzt:
Die Anordnung von drei Magneten nebeneinander auf einer magnetisierbaren Platte hat sich als vorteilhaft herausgestellt, insbesondere bei Verwendung von scheibenförmigen Magneten.

In Weiterbildung der Erfindung besteht das Gehäuse aus nicht magnetisierbarem Material, insbesondere Kunststoff.

Auf diese Weise können auch komplizierte Gehäuseformen in einfacher Weise, beispielsweise durch Kunststoffspritzguß, hergestellt werden. Die Herstellung des Gehäuses aus nichtmagnetisierbarem Metall, beispielsweise Zink, ist aber ebenfalls möglich. Das Gehäuse kann dadurch durchaus kompliziert geformt sein und beispielsweise auf einer dem Betrachter abgewandten Rückseite mit Verstärkungsrippen oder ähnlichem versehen sein.

In Weiterbildung der Erfindung weist das Gehäuse Führungen zum Einsetzen der Magnete auf, wobei die Führungen sich ausgehend von einer Rückseite des Gehäuses, die im montierten Zustand einer Wand des Magnetwandsystems zugewandt ist, in das Gehäuse erstrecken, und wobei anschließend an die Führungen die wenigstens eine Raststelle für die magnetisierbare Platte angeordnet ist.

Mittels solcher Führungen können die Magnete beim Aufsetzen auf die magnetisierbare Platte geführt werden, so dass sie in allen drei Raumrichtungen relativ zum Gehäuse exakt positioniert werden können. Die Führungen müssen dabei lediglich während des Einführens der Magnete in das Gehäuse diese führen, nach dem Aufsetzen auf die magnetisierbare Platte sind die Magnete bezüglich ihrer Position zum Gehäuse festgelegt. Die Montage der Magnete wird dabei auch dadurch erheblich vereinfacht, dass kein Verkleben der Magnete in den Führungen erforderlich ist. Nach dem Aufsetzen der Magnete auf die magnetisierbare Platte kann aber, falls dies als erforderlich angesehen wird, ein Zwischenraum zwischen den Führungen und den Magneten ausgefüllt werden, gegebenenfalls mit Klebstoff, um beispielsweise das Eindringen von Verunreinigungen zu verhindern.

In Weiterbildung der Erfindung ist das Gehäuse mit wenigstens einer Öffnung in einer im montierten Zustand einer Wand des Magnetwandsystems abgewandten Vorderseite und einem sich an die Öffnung anschließenden Hohlraum versehen, wobei der Hohlraum und die Öffnung gemeinsam einen Hinterschnitt zum Anordnen eines Eingreifteils einer Haltevorrichtung bilden. Auf diese Weise kann das Gehäuse mit unterschiedlichen Haltevorrichtungen kombiniert werden. Die Herstellung des Gehäuses ist dadurch in großen Stückzahlen möglich, da die erforderliche Flexibilität in Bezug auf unterschiedliche Haltevorrichtungen dennoch erreicht werden kann. Unterschiedlichste Haltevorrichtungen, beispielsweise Haken, Stangen, Platten und dergleichen müssen lediglich mit identischen Eingreifteilen versehen werden, um an dem Gehäuse befestigt werden zu können.

Bei einem Magnetwandsystem mit einer magnetisierbaren Wand und einem erfindungsgemäßen Wandhalter ist vorgesehen, dass die magnetisierbare Platte in einer Weise ausgebildet, dass eine Haltekraft der Magnete an der Platte größer ist als eine Haltekraft der Magnete an einer Wand des Magnetwandsystems.

Auf diese Weise kann sichergestellt werden, dass beim Abnehmen des Wandhalters von der Wand des Magnetwandsystems die Magnete am Gehäuse verbleiben und nicht an der Wand. Dadurch kann auf eine Verklebung oder sonstige Arretierung im Gehäuse verzichtet werden. Dies erleichtert nicht nur die Montage sondern vor allem auch die exakte Ausrichtung der Haftflächen der Magnete an der Wand des Magnetwandsystems einerseits und an der magnetisierbaren Platte im Gehäuse andererseits.

Weitere Merkmale und Vorteile der Erfindung ergeben sich aus der Beschreibung und der nachfolgenden Beschreibung bevorzugter Ausführungsformen der Erfindung im Zusammenhang mit den Zeichnungen. Einzelmerkmale der unterschiedlichen, in den Figuren gezeigten Ausführungsformen können dabei in beliebiger Weise kombiniert werden, ohne den Rahmen der Erfindung zu überschreiten. In den Zeichnungen zeigen:
- Fig.1.: eine perspektivische Ansicht eines erfindungsgemäßen Wandhalters gemäß einer ersten Ausführungsform der Erfindung von schräg vorne,
- Fig. 2: den Wandhalter der Fig. 1 von schräg hinten,
- Fig. 3: eine Vorderansicht des Wandhalters der Fig. 1,
- Fig. 4: eine Seitenansicht dieses Wandhalters,
- Fig. 5: eine Ansicht des Wandhalters von oben,
- Fig. 6: eine Ansicht des Wandhalters von hinten,
- Fig. 7: einen Ansicht auf die Schnittebene VII-VII aus Fig. 6,
- Fig. 8: eine Ansicht auf die Schnittebene VIII-VIII in Fig. 6,
- Fig. 9: eine Ansicht auf die Schnittebene IX-IX in Fig. 6,
- Fig. 10: eine Draufsicht auf eine Metallplatte in dem Gehäuse des Wandhalters der Fig. 1,
- Fig. 11: eine Draufsicht auf einen Magneten aus dem Gehäuse des Wandhalters,
- Fig. 12: eine Seitenansicht des Magneten der Fig. 11,
- Fig. 13: eine Vorderansicht des Wandhalters der Fig. 1 mit einer eingesetzten Haltevorrichtung,
- Fig. 14: eine Seitenansicht des Wandhalters der Fig. 13,
- Fig. 15: eine Ansicht des Wandhalters der Fig. 13 von oben,
- Fig. 16: eine Ansicht des Wandhalters von hinten,
- Fig. 17: eine Ansicht auf die Schnittebene XVII-XVII in Fig. 16,
- Fig. 18: eine Ansicht des Wandhalters der Fig. 13 von schräg vorne,
- Fig. 19: eine Ansicht des Wandhalters der Fig. 13 von schräg hinten,
- Fig. 20: eine Vorderansicht eines Wandhalters gemäß einer weiteren bevorzugten Ausführungsform der Erfindung,
- Fig. 21: eine Seitenansicht des Wandhalters der Fig. 20,
- Fig. 22: eine Ansicht des Wandhalters der Fig. 20 von hinten,
- Fig. 23: einen Ansicht des Wandhalters von Fig. 20 von schräg hinten,
- Fig. 24: eine Ansicht des Wandhalters der Fig. 20 von schräg vorne,
- Fig. 25: eine Ansicht eines Positionierstreifens aus dem Wandhalter der Fig. 20 von schräg oben,
- Fig. 26: eine Vorderansicht eines Wandhalters gemäß einer weiteren bevorzugten Ausführungsform der Erfindung,
- Fig. 27: eine Seitenansicht des Wandhalters der Fig. 26,
- Fig. 28: eine Ansicht des Wandhalters der Fig. 26 von hinten,
- Fig. 29: eine Ansicht des Wandhalters der Fig. 26 von schräg hinten und
- Fig. 30: eine Ansicht des Wandhalters der Fig. 26 von schräg vorne.

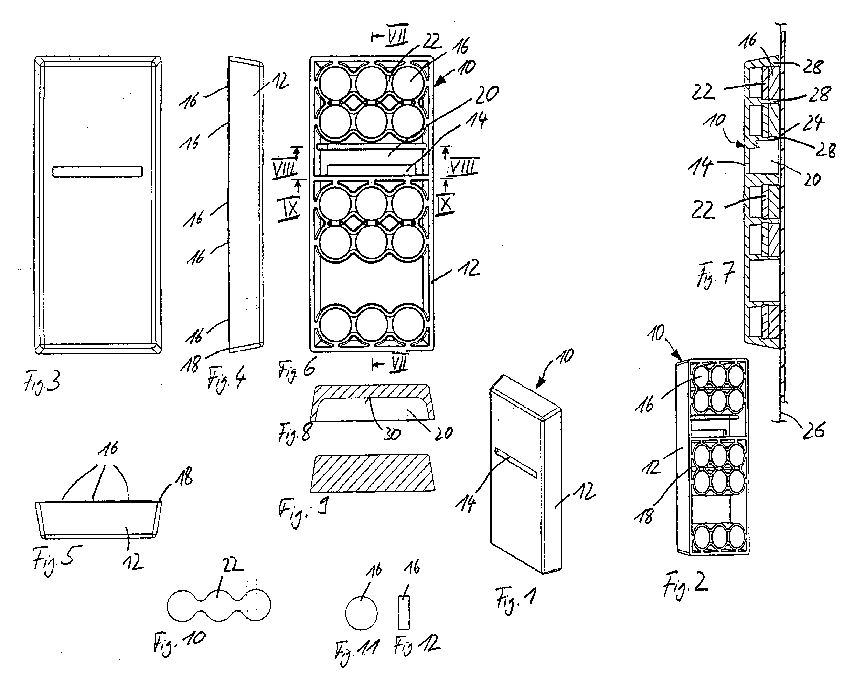

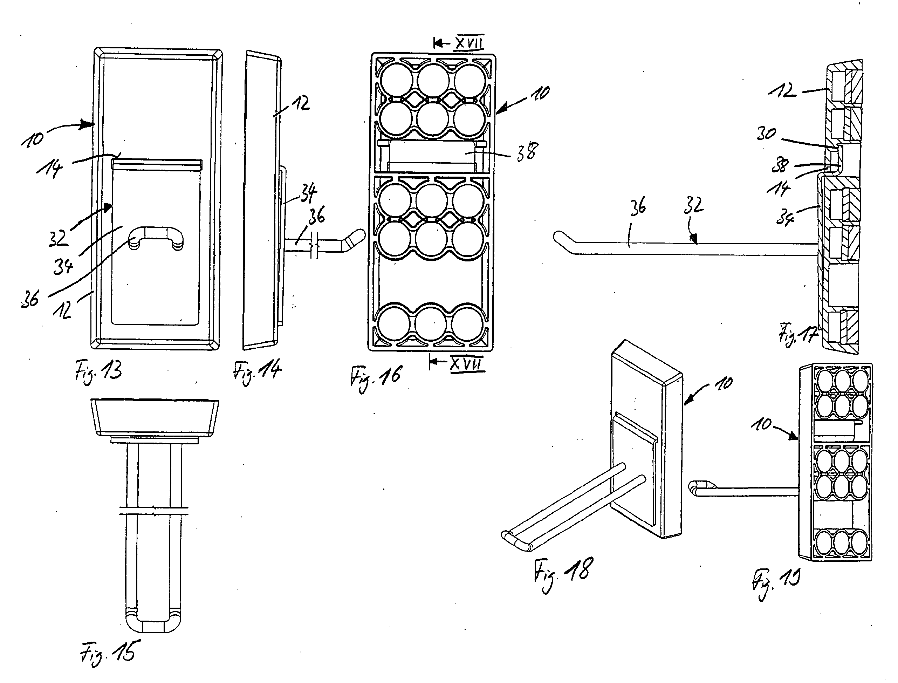

Die Darstellung der Fig. 1 zeigt einen erfindungsgemäßen Wandhalter 10 gemäß einer ersten Ausführungsform mit einem Gehäuse 12. Das Gehäuse 12 weist eine rechteckige Grundfläche und eine gegenüber der Grundfläche geringfügig kleinere, ebenfalls rechteckige Vorderfläche auf. Im Querschnitt weist das Gehäuse 12 sowohl im Längs- als auch im Querschnitt eine trapezförmige Gestalt auf. Die Vorderfläche des Gehäuses ist mit einer langgestreckten Öffnung 14 versehen, die in der Montageposition des Wandhalters 10 waagerecht angeordnet ist und die zum Einhängen einer Haltevorrichtung, beispielsweise eines Drahtbügels, wie er in Fig. 18 gezeigt ist, vorgesehen ist.

Der Wandhalter 10 bildet Teil eines Magnetwandsystems und ist dafür vorgesehen, auf eine magnetisierbare Wand aufgesetzt zu werden.

Hierzu sind, wie in der Ansicht des Wandhalters 10 von schräg hinten in Fig. 2 zu erkennen ist, insgesamt 15 Magnete 16 in eine Rückseite des Gehäuses 12 eingesetzt. Die Magnete 16 sind jeweils scheibenförmig ausgebildet und ragen mit ihrer dem Gehäuse 12 abgewandten Haftfläche, die in Fig. 2 zu erkennen ist, geringfügig über einen unteren Rand 18 des Gehäuses hinaus. Beim Aufsetzen des Wandhalters 10 auf eine ebene Fläche liegen dadurch ausschließlich die Magnete 16 auf dieser Fläche auf, nicht aber der Rand 18 des Gehäuses 12. Im aufgesetzten Zustand auf eine magnetisierbare Wand kann dadurch ein sehr geringer Abstand zwischen den Magneten 16 und dieser Wand und dadurch gleichzeitig auch eine hohe Haltekraft sichergestellt werden.

Die Darstellungen der Fig. 3, Fig. 4 und Fig. 5 zeigen Ansichten des Wandhalters 10 von vorne, von der Seite bzw. von oben. In den Ansichten der Fig. 4 und Fig. 5 ist gut zu erkennen, dass die Magneten 16 mit ihrer vom Gehäuse 12 abgewandten Haftfläche geringfügig über den Rand 18 des Gehäuses 12 hinausragen.

Die Ansicht der Fig. 6 zeigt den Wandhalter 10 von hinten. Die insgesamt 15 Magnete 16 sind jeweils in Reihen zu drei Stück nebeneinander angeordnet. Insgesamt fünf Reihen zu jeweils drei Magneten sind dann untereinander angeordnet.

Auf die obersten zwei Reihen von Magneten 16 folgt ein Zwischenraum, in dem die langgestreckte Öffnung 14 liegt und an die sich innerhalb des Gehäuses ein Hohlraum 20 anschließt. Der Hohlraum 20 und die Öffnung 14 bilden gemeinsam einen Hinterschnitt zum Einhängen einer Haltevorrichtung 32, wie sie beispielsweise in Fig. 17 gezeigt ist.

Auf die Öffnung 14 folgen zwei weitere Reihen von Magneten 16. Nach einem Zwischenraum folgt dann die letzte Reihe von drei nebeneinander angeordneten Magneten. Dieser Zwischenraum kann ggf. dazu genutzt werden, eine weitere Reihe von Magneten anzuordnen oder beispielsweise eine weitere Öffnung im Gehäuse vorzusehen, um erforderlichenfalls eine weitere Haltevorrichtung anzuordnen.

Die drei Magnete 16 einer Reihe sind jeweils auf eine Metallplatte 22 aufgesetzt, die im Gehäuse 12 befestigt ist. Die Magnete 16 sitzen dabei unmittelbar und ohne Zwischenfügung von Klebstoff oder dergleichen auf der jeweiligen Metallplatte 22 auf. Dies ist in der Schnittansicht der Fig. 7 zu erkennen. Die Magnete 16 werden dadurch mittels der Metallplatten 22 exakt zueinander ausgerichtet. Jedenfalls die drei nebeneinander auf einer gemeinsamen Metallplatte 22 aufsitzenden Magnete 16 sind parallel zu dieser Metallplatte 16 angeordnet. Vorausgesetzt die scheibenförmigen Magnete 16 weisen planparallele Haftflächen auf und die Metallplatte 20 weist eine ebene Vorderfläche auf, so sind dadurch auch die dem Gehäuse 12 abgewandten Haftflächen der Magneten 16 exakt parallel zueinander und in einer Ebene ausgerichtet.

Diese Ausrichtung der Magnete 16 erlaubt es daher, zwischen den Haftflächen der Magnete 16 und einer magnetisierbaren Wand 24 eines Magnetwandsystems einen sehr geringen und vor allem über alle Magnete 16 gesehen sehr gleichmäßigen Abstand aufrecht zu erhalten.

In der Darstellung der Fig. 7 ist zwischen der magnetisierbaren Wand 24 und den Magneten 16 eine Stoffbespannung 26 zu erkennen. Diese Stoffbespannung 26 ist dünn, so dass der Wandhalter 10 nur unter Aufbringung einer vergleichsweise großen Kraft von der Wand 24 abgehoben werden oder auch parallel zu dieser verschoben werden kann. Bei entsprechender Dimensionierung der Magnete 16 können auch dickere Wandbespannungen 26 vorgesehen werden, beispielsweise aus Leder oder Kunststoff. Anstelle einer Wandbespannung 26 kann die magnetisierbare Wand aber beispielsweise auch lediglich beschichtet oder lackiert sein.

Wie anhand der Darstellung der Fig. 7 zu erkennen ist, sind die Metallplatten 22 jeweils in angepasste Raststellen im Gehäuse 12 eingesetzt. Zum Einsetzen der Metallplatten 22 werden diese in der Ansicht der Fig. 7 von rechts in das Gehäuse hineingedrückt, Während dieses Eindrückvorgangs werden die Wände 28, die zum Führen der Magnete 16 bei deren Einsetzvorgang vorgesehen sind, geringfügig aufgeweitet, bis die Metallplatten 22 ihre Endposition erreicht haben, die in Fig. 7 dargestellt ist. Im Bereich dieser Endposition sind die Wände 28 mit einer Ausnehmung versehen, die auf die Außenabmessungen der Metallplatte 22 angepasst ist. Sobald also die Metallplatten 22 ihre Endposition erreicht haben, schnappen die Wände 28 in ihre Ausgangsposition zurück und halten dadurch die Metallplatten 22 sicher in der vordefinierten Position. Nachfolgend können die Magnete 16 zwischen die Wände 28 eingeführt werden. Ein Abstand zwischen den Wänden 28 ist dabei so bemessen, dass die Magnete 16 im Wesentlichen spielfrei auf ihre vorgesehene Endposition geführt werden. Im Gehäuse 12 werden die Magnete 16 aber nicht durch eine Klemmkraft der Wände 28 sondern durch die magnetische Haltekraft zwischen den Magneten 16 und der jeweiligen Metallplatte 22 gehalten.

Die Metallplatte 22 ist dabei so bemessen und ausgebildet, dass eine Haltekraft zwischen den Magneten 16 und der jeweiligen Metallplatte 22 größer ist als eine Haltekraft zwischen den Magneten 16 und der Wand 24. Beim Abnehmen des Wandhalters 10 von der Wand 24 verbleiben die Magneten 16 dadurch im Gehäuse 12. Dies wird bei der dargestellten Ausführungsform dadurch erreicht, dass die Metallplatten 22 dicker sind als die magnetisierbare Wand 24. Wenn die Metallplatten 22 und die Wand 24 aus dem gleichen Material bestehen, beispielsweise Stahlblech, wird die Haltekraft zwischen den Magneten 16 und den Metallplatten 22 dadurch größer sein als die Haltekraft zwischen den Magneten 16 und der Wand 24. Dies wäre schon ohne Zwischenfügung der Stoffbespannung 26 der Fall, die Stoffbespannung 26 verringert aber natürlich die Haltekraft zwischen den Magneten 16 und der Wand 24 weiter geringfügig. Die Magnete 16 verbleiben dadurch beim Abnehmen des Wandhalters 10 von der Wand 24 verlässlich innerhalb des Gehäuses 12 und damit am Wandhalter 10.

Die Darstellung der Fig. 8 zeigt eine Ansicht auf die Schnittebene XIII-XIII aus Fig. 6. In der Darstellung der Fig. 8 ist der Hohlraum 20 und eine Anschlagfläche 30 innerhalb des Hohlraums 20 zu erkennen, auf der dann im montierten Zustand das Eingreifteil einer Haltevorrichtung aufliegt, wie beispielsweise in Fig. 16 und Fig. 17 zu erkennen ist.

Die Darstellung der Fig. 9 zeigt eine Ansicht der Schnittebene IX-IX aus Fig. 6. Im Bereich der Schnittebene IX-IX ist eine Versteifungsrippe 28 im Gehäuse 12 vorgesehen, die den gesamten Querschnitt des Gehäuses 12 ausfüllt und die gleichzeitig den Hohlraum 20 an einer Seite begrenzt.

Die Darstellung der Fig. 10 zeigt die Metallplatte 22 in einer Draufsicht. Die Metallplatte 22 weist eine langgestreckte Form auf, die sich durch die Aneinanderreihung dreier Vollkreise ergibt, die jeweils mittels Stegen verbunden sind. Die Übergänge zwischen den Vollkreisen und den Stegen sind dabei ausgerundet aufgeführt.

Die Darstellungen der Fig. 11 und Fig. 12 lassen die Scheibenform der Magnete 16 und die dadurch planparallelen Haftflächen der Magnete 16 erkennen.

Die Darstellung der Fig. 13 zeigt den Wandhalter 10 der Fig. 1, wobei in die Öffnung 14 eine Haltevorrichtung 30 eingesetzt ist. Die Haltevorrichtung 32 besteht aus einer im Bereich eines Eingreifteils, das sich in die Öffnung 14 und damit in das Gehäuse 12 hineinerstreckt, abgewinkelten Blechplatte, auf die ein U-Bügel 36 aufgesetzt ist.

Wie in Fig. 14 und Fig. 15 zu erkennen ist, stützt sich die Blechplatte 34 an einer Vorderfläche des Gehäuses 12 ab und der U-Bügel 36 ragt im Wesentlichen senkrecht von der Vorderfläche des Gehäuses 12 ab. Der U-Bügel 36 kann beispielsweise für das Halten von sogenannten Blisterverpackungen benutzt werden.

Der Ansicht der Fig. 16, die den Wandhalter 10 mit eingesetzter Haltevorrichtung von hinten zeigt, ist sowie auch der Darstellung der Fig. 17 ist zu entnehmen, dass ein Eingreifteil 38 der Blechplatte 34 L-förmig ausgebildet ist und mit dem freien Ende auf der Anschlagfläche 30 im Inneren des Gehäuses 12 aufliegt. Die Haltevorrichtung 32 kann dadurch mit dem Eingreifteil 38 voran in die Öffnung 14 eingeschoben werden und dann um einen Winkel von etwa 90° gegen den Uhrzeigersinn in die in Fig. 17 dargestellte Lage verschwenkt werden. Dadurch gelangt das freie Ende des Eingreifteils 38 in Anlage an die Anschlagfläche 30 und die Haltevorrichtung 32 ist dadurch auch bei Belastung des U-Bügels 36 nach unten an Gehäuse 12 gehalten.

Soll die Haltevorrichtung 32 gegen einen andere Haltevorrichtung ausgetauscht werden, beispielsweise ein Kleiderhaken oder dergleichen, muss die Haltevorrichtung 32 lediglich wieder nach oben geklappt werden, so dass das Eingreifteil 38 aus dem Gehäuse 12 entnommen werden kann. Der erfindungsgemäßen Wandhalter 10 ermöglicht es dadurch, unterschiedlichste Haltevorrichtungen zu verwenden, wenn diese unterschiedlichen Haltevorrichtungen nur ein jeweils identisch bemessenes Eingreifteil 38 aufweisen.

Die Darstellung der Fig. 18 zeigt den Wandhalter 10 der Fig. 13 von schräg vorne und die Darstellung der Fig. 19 von schräg hinten.

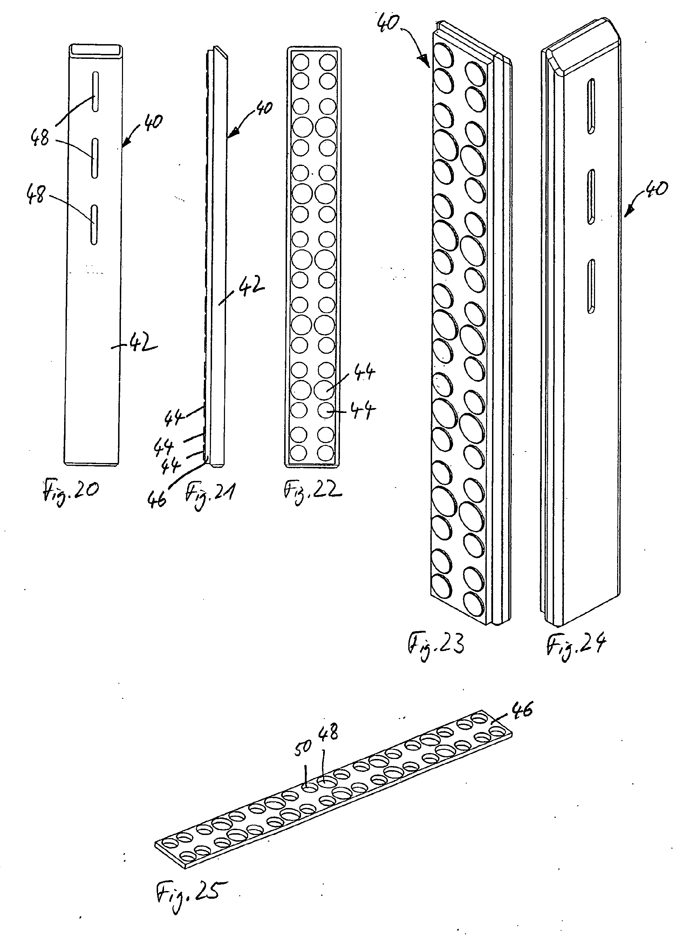

In der Darstellung der Fig. 20 ist ein erfindungsgemäßen Wandhalter 40 gemäß einer weiteren bevorzugten Ausführungsform der Erfindung dargestellt. Der Wandhalter 40 weist ein Gehäuse 42 in Form eines Rechteckrohres mit abgerundeten Kanten auf. Dieses Rechteckrohr besteht aus Metall und eine Rückseite, die in Fig. 20 dem Betrachter abgewandt ist, bildet die magnetisierbare Platte, auf die mehrere Magnete unmittelbar aufgesetzt sind. In der Darstellung der Fig. 21 sowie in der Fig. 22 ist zu erkennen, dass mehrere Magnete 44 mit ihren Haftflächen unmittelbar auf die Rückseite des Gehäuses 42 aufgesetzt sind. Die Magnete 44 werden dabei mittels eines Positionierungsstreifens 46 in ihrer Position gehalten. Der Positionierstreifen 46 ist in der Fig. 25 dargestellt und kann beispielsweise aus einem Kunststoffstreifen bestehen, der mit mehreren kreisrunden Öffnungen 48, 50 versehen ist, die jeweils zur Aufnahme eines scheibenförmigen Magneten vorgesehen sind.

In der Darstellung der Fig. 22 ist gut zu erkennen, dass scheibenförmige Magnete 44 mit unterschiedlichem Durchmesser verwendet werden. Am oberen und am unteren Ende des Wandhalters 40 sind jeweils vier scheibenförmige Magnete 44 mit kleinerem Durchmesser angeordnet. Zwischen diesen oben und unten angeordneten Magnetgruppen sind dann jeweils Gruppen zu je sechs scheibenförmigen Magneten 44 angeordnet, wobei jede Gruppe nach oben und unten durch zwei scheibenförmige Magnete kleineren Durchmessers begrenzt wird, auf die dann zwei scheibenförmige Magnete 44 größeren Durchmessers folgen.

Der Positionierstreifen 46 kann auf die Rückseite des rechteckrohrförmigen Gehäuses 42 aufgeklebt sein. Die scheibenförmigen Magnete 44 sind aber unmittelbar auf die Rückseite des Gehäuses 42 aufgesetzt und werden dadurch mittels der magnetischen Haltekraft an dem Gehäuse 42 gehalten.

Wie in der Darstellung der Fig. 21 gut zu erkennen ist, ragt die jeweilige, dem Gehäuse 42 abgewandte Haltefläche der Magnete 44 geringfügig über den Positionierstreifen 46 hinaus. Beim Aufsetzen des Wandhalter 40 auf eine magnetisierbare Wand, beispielsweise eine Blechfläche, ist dadurch sichergestellt, dass die Magnete 44 unmittelbar auf dieser Wand aufsitzen. Auch dann, wenn zwischen die Magnete 44 und die Wand eine Bespannung gelegt wird, ist dadurch sichergestellt, dass die Magnete 44 in möglichst geringem Abstand zu der magnetisierbaren Wand angeordnet sind, so dass eine hohe Haltekraft gewährleistet ist.

Auf der in Fig. 20 erkennbaren Vorderseite des Wandhalters 40 ist das rohrförmige Gehäuse 42 mit insgesamt drei untereinander angeordneten langgestreckten Öffnungen 48 versehen. Diese langgestreckten Öffnungen 48 bilden zusammen mit dem Innenraum des rohrförmige Gehäuses 42 einen Hinterschnitt, mit dem Haltevorrichtungen an dem Wandhalter 40 befestigt werden können. Solche Haltevorrichtungen können beispielsweise einhängbare Fachbodenträger für Regale sein, in die langgestreckten Öffnungen 48 können aber auch die Klemmhaken von Spannschlössern eingesetzt werden, wie sie im Messe- und Ladenbau zur Verbindung von Bauteilen untereinander bekannt sind.

Die Darstellung der Fig. 23 zeigt den Wandhalter 40 in einer Ansicht von schräg hinten und die Darstellung der Fig. 24 in einer Ansicht von schräg vorne.

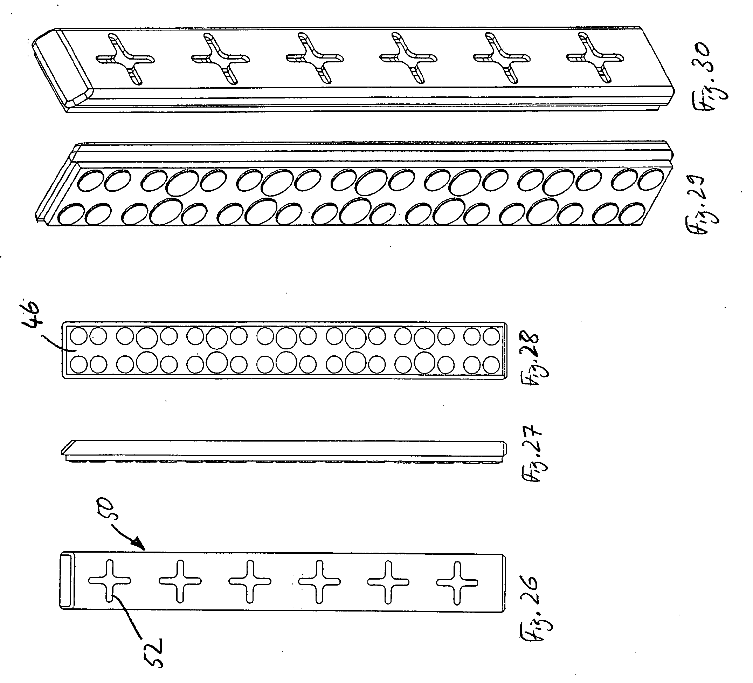

Die Darstellungen der Fig. 26 bis 30 zeigen einen erfindungsgemäßen Wandhalter 50 gemäß einer weiteren bevorzugten Ausführungsform der Erfindung. Der Wandhalter 50 unterscheidet sich von dem in Fig. 20 dargestellten Wandhalter 40 lediglich durch die Form von Öffnungen 52 auf seiner Vorderseite. Die nicht sichtbare Rückseite des rohrförmigen Wandhalters 50 ist ebenfalls mit deckungsgleichen Öffnungen 52 versehen, die aber von dem Positionierstreifen 46 verdeckt sind. Im Übrigen ist der Wandhalter 50 gleich wie der Wandhalter 40 aufgebaut, so dass auf eine erneute Erläuterung verzichtet wird.

Die Öffnungen 52 sind jeweils kreuzförmig ausgebildet und bestehen jeweils aus zwei langgestreckten Öffnungen, die im Winkel von 90° zueinander angeordnet sind. Eine der langgestreckten Öffnungen verläuft dabei parallel zu einer Mittellängsachse des Wandhalters 50, die andere senkrecht hierzu. Die kreuzförmige Form der Öffnungen hält in Verbindung mit dem Innenraum des rohrförmigen Wandhalters 50 Hinterschnitte bereit, an denen Haltevorrichtungen befestigt werden können. Zusammen mit den kreuzförmigen Öffnungen 52 können die bereits erwähnten Spannschlösser verwendet werden, es ist aber beispielsweise auch möglich, eine Haltevorrichtung in die waagerechten Abschnitte der Öffnungen einzuschieben und dann parallel zum Wandhalter 50 nach unten zu verschieben, um die Eingreifteile am Wandhalter 50 zu sichern.

## Patentansprüche

1. Wandhalter für ein Magnetwandsystem mit einem Gehäuse (12, 42) sowie wenigstens zwei in das Gehäuse (12, 42) eingesetzten Magneten, wobei das Gehäuse (12, 42) wenigstens eine magnetisierbare Platte (22) aufweist, auf die jeweils wenigstens zwei Magnete (16, 44) unmittelbar aufgesetzt sind, **dadurch gekennzeichnet, dass** das Gehäuse (12) wenigstens eine Raststelle mit wenigstens einem Rastvorsprung aufweist, wobei die magnetisierbare Platte (22) mittels der Raststelle am Gehäuse (12) befestigt ist und dass die Magnete (16, 44) mit ihrer, dem Gehäuse (12, 42) abgewandten Haftfläche geringfügig über einen Rand (18) des Gehäuses (12, 42) hinausragen.

2. Wandhalter nach Anspruch 1, **dadurch gekennzeichnet, dass** jeweils drei Magnete (16) auf eine magnetisierbare Platte (22) aufgesetzt sind.

3. Wandhalter nach einem der vorstehenden Ansprüche, **dadurch gekennzeichnet, dass** das Gehäuse (12) aus nicht magnetisierbarem Material, insbesondere Kunststoff, besteht.

4. Wandhalter nach wenigstens einem der vorstehenden Ansprüche, **dadurch gekennzeichnet, dass** das Gehäuse (12) Führungen zum Einsetzen der Magnete (16) aufweist, wobei die Führungen sich ausgehend von einer Rückseite des Gehäuses (12), die im montierten Zustand einer Wand (24) des Magnetwandsystems zugewandt ist, in das Gehäuse (12) erstrecken und wobei anschließend an die Führungen die wenigstens eine Raststelle für die magnetisierbare Platte (22) angeordnet ist.

5. Wandhalter nach wenigstens einem der vorstehenden Ansprüche, **dadurch gekennzeichnet, dass** das Gehäuse (12) mit wenigstens einer Öffnung (14, 48, 52) in einer im montierten Zustand einer Wand (24) des Magnetwandsystems abgewandten Vorderseite und einem sich an die Öffnung (14, 48, 52) anschließenden Hohlraum versehen ist, wobei der Hohlraum (20) und die Öffnung (14, 48, 52) gemeinsam einen Hinterschnitt zum Anordnen eines Eingreifteils (38) einer Haltevorrichtung (32) bilden.

6. Magnetwandsystem mit einer magnetisierbaren Wand (24) und wenigstens einem Wandhalter nach einem der vorstehenden Ansprüche, **dadurch gekennzeichnet, dass** die magnetisierbare Platte (22) in einer Weise ausgebildet ist, dass eine Haltekraft der Magnete (16, 44) an der Platte (22) größer ist als eine Haltekraft der Magnete (16, 44) an der Wand (24) des Magnetwandsystems.

## Claims

1. A wall mounting for a magnetic wall system comprising a housing (12, 42) and at least two magnets inserted into the housing (12, 42), the housing (12, 42) including at least one magnetizable panel (22), on which in each case at least two magnets (16, 44) are directly attached,
**characterized in that**
the housing (12) includes at least one locking position having at least one locking protrusion, wherein the magnetizable panel (22) is fixed to the housing (12) by means of the locking position, and **in that** the magnets (16, 44) with their adhering surface facing away from the housing (12, 42) projecting beyond an edge (18) of the housing (12, 42) to a minor extent.

2. The wall mounting according to claim 1, **characterized in that** in each case three magnets (16) are attached on one magnetizable panel (22).

3. The wall mounting according to any of the preceding claims, **characterized in that** the housing (12) is made of non-magnetizable material, in particular is made of synthetic material.

4. The wall mounting according to at least one of the preceding claims, **characterized in that** the housing (12) has guidances for inserting the magnets (16), wherein the guidances extend into the housing (12) starting from a rear side of the housing (12) which in the installed condition faces a wall (24) of the magnetic wall system, and wherein the at least one locking position for the magnetizable panel (22) is disposed adjacent to the guidances.

5. The wall mounting according to at least one of the preceding claims, **characterized in that** the housing (12) is provided with at least one opening (14, 48, 52) in a front side facing away from a wall (24) of the magnetic wall system in the installed condition and a cavity adjacent to the opening (14, 48, 52), wherein the cavity (20) and the opening (14, 48, 52) together form an undercut for disposing an engagement part (38) of a mounting device (32).

6. A magnetic wall system comprising a magnetizable wall (24) and at least one wall mounting according to any of the preceding claims, **characterized in that** the magnetizable panel (22) is configured such that a retention force of the magnets (16, 44) to the panel (22) is greater than a retention force of the magnets (16, 44) to the wall (24) of the magnetic wall system.

## Revendications

1. Support mural pour un système mural à aimant comprenant un boîtier (12, 42) ainsi qu'au moins deux aimants insérés dans le boîtier (12, 42), le boîtier (12, 42) présentant au moins une plaque (22) pouvant être aimantée, sur laquelle sont posés directement les au moins deux aimants respectifs (16, 44),
**caractérisé en ce que**
le boîtier (12) présente au moins un point d'encliquetage avec au moins une saillie d'encliquetage, la plaque (22) pouvant être aimantée étant fixée au moyen du point d'encliquetage sur le boîtier (12) et les aimants (16, 44) faisant légèrement saillie au-delà d'un bord (18) du boîtier (12, 42) avec leur surface adhérente opposée au boîtier (12, 42).

2. Support mural selon la revendication 1, **caractérisé en ce que** trois aimants respectifs (16) sont posés sur une plaque (22) pouvant être aimantée.

3. Support mural selon l'une quelconque des revendications précédentes, **caractérisé en ce que** le boîtier (12) est constitué d'un matériau non aimantable, en particulier de plastique.

4. Support mural selon au moins l'une quelconque des revendications précédentes, **caractérisé en ce que** le boîtier (12) présente des guides pour l'insertion des aimants (16), les guides s'étendant dans le boîtier (12) depuis un côté arrière du boîtier (12) qui est tourné dans l'état monté vers une paroi (24) du système mural à aimant et l'au moins un point d'encliquetage pour la plaque (22) pouvant être aimantée étant disposé ensuite sur les guides.

5. Support mural selon au moins l'une quelconque des revendications précédentes, **caractérisé en ce que** le boîtier (12) est pourvu d'au moins une ouverture (14, 48, 52) dans un côté avant opposé, dans l'état monté, à une paroi (24) du système mural à aimant et d'une cavité se raccordant à l'ouverture (14, 48, 52), la cavité (20) et l'ouverture (14, 48, 52) formant ensemble une contre-dépouille pour l'agencement d'une partie d'engagement (38) d'un dispositif de retenue (32).

6. Système mural à aimant comprenant une paroi (24) pouvant être aimantée et au moins un support mural selon l'une quelconque des revendications précédentes, **caractérisé en ce que** la plaque (22) pouvant être aimantée est réalisée de telle sorte qu'une force de retenue des aimants (16, 44) au niveau de la plaque (22) soit supérieure à une force de retenue des aimants (16, 44) au niveau de la paroi (24) du système mural à aimant.
